(19) Europäisches Patentamt
European Patent Office
Office européen des brevets

(11) Publication number: 0 400 506 A2

# (12) EUROPEAN PATENT APPLICATION

(21) Application number: 90109999.4

(22) Date of filing: 25.05.90

(51) Int. Cl.[5]: C08L 71/12, C08L 25/14, C08L 33/08

A request for correction of the description and claims has been filed pursuant to Rule 88 EPC. A decision on the request will be taken during the proceedings before the Examining Division (Guidelines for Examination in the EPO, A-V, 2.2).

(30) Priority: 25.05.89 JP 130196/89
09.06.89 JP 147269/89

(43) Date of publication of application:
05.12.90 Bulletin 90/49

(84) Designated Contracting States:
DE FR GB IT

(71) Applicant: DAINIPPON INK AND CHEMICALS, INC.
35-58, Sakashita 3-chome
Itabashi-ku Tokyo(JP)

(72) Inventor: Kobayashi, Norio
1-22-7 Kotehashidai
Chiba-shi, Chiba-ken(JP)
Inventor: Hiroyoshi, Ueda
1-13-24-208 Tsudanuma
Narashino-shi, Chiba-ken(JP)

(74) Representative: Kraus, Walter, Dr. et al
Patentanwälte Kraus, Weisert & Partner
Thomas-Wimmer-Ring 15
D-8000 München 22(DE)

## (54) Thermoplastic resin composition.

(57) A thermoplastic resin composition comprising (A) a polyphenylene ether-type resin, (B) a copolymer resin prepared from a vinyl monomer and (meth)acrylic acid as essential components and (C) an alkyl (meth)acrylate resin and optionally (D) rubber and/or rubber-containing thermoplastic resin.

EP 0 400 506 A2

## THERMOPLASTIC RESIN COMPOSITION

This invention relates to a polyphenylene ether-type resin composition which is useful in various fields such as electrical and electronic applications, business machines, communications, accoustic appplications, image-forming applications, automotive applications, vehicles, machinery, sporting goods, daily sundries, and civil engineering and building applications.

Generally, polyphenylene ether-type resins are widely known as resins having excellent thermal resistance. But they have inferior moldability, and moreover, tehy tend to undergo thermal discoloration or gellation. In addition these resins have the defect that warpage is great in molding, and the molded articles may break. For this reason, the polyphenylene ether resins are hardly used singly, and are desired to be improved. For example, attempts have been made to modify the polyphenylene other resins by mixing the polyphenylene ether resins with other resins. For example, a cyano-containing polyphenylene ether or a carboxyl-containing polyphebnylene ether is mixed with styrene resins (Japanese Laid-Open Patent Publications Nos. 65749/1983 and Japanese Laid-Open Patent Publications No. 59947/1982). A polyphenylene ether is mixed with a styrene-type resin and an elastomer together with an inorganic filler (U. S. Patent No. 4,483,958). Japanese Laid-Open Patent Publication No. 263251/1987 discloses mixing of an aromatic polyphenylene ether resin and polyethyelen terephthalate with an aromatic vinyl-unsaturated carboxylic acid or an unsaturated ester copolymer. Furthermore, European Laid-Open Patent No. 0150388 describes the mixing of a polyphenbylene ether, an aromatic vinyl monomer/(meth)acrylic acid copolymer and an elastomer. These improved resin compositions are widely find applications in automotive parts, parts of business machines and electric and electronic component parts.

The resin compositions comprising a polyphenylene ether resin and a styrene resin has good thermal resistance and moldability but have slightly lower mechanical properties such as tensile strength and flexural strength and impact strength. It is strongly desired to provide compositions having a further improvement in mechanical properties and impact strength.

In view of the foregoing state of art, the present inventors made extensive investigations. These investigations have now led to the discovery that a thermoplastic resin composition prepared by adding a copolymer resin prepared from an aromatic vinyl monomer and (meth)acrylic acid as essential components and an alkyl (meth)acrylate such as polymethyl methacrylate to a polyphenylene ether resin has especially good impact strength and mechanical properties and excellent thermal resistance and moldability, and that a thermoplastic resin composition prepared by further adding rubber and or a rubber-containing thermoplastic resin has an especially outstanding impact strength.

Thus according to this invention, there are provided a thermoplastic resin composition comprising (A) a polyphenylene ether-type resin, (B) a copolymer resin prepared from an aromatic vinyl monomer and (meth)acrylic acid as essential components and (C) an alkyl (meth)acrylate resin; and (A) a polyphenylene ether resin (A), (B) a copolymer resin prepared from an aromatic vinyl monomer and (meth)acrylic acid as essential components, (C) an alkyl (meth)acrylate resin, and (D) rubber and/or a rubber-containing thermoplastic resin.

The polyphenylene ether resin (A) used in this invention is represented by the general formula (I).

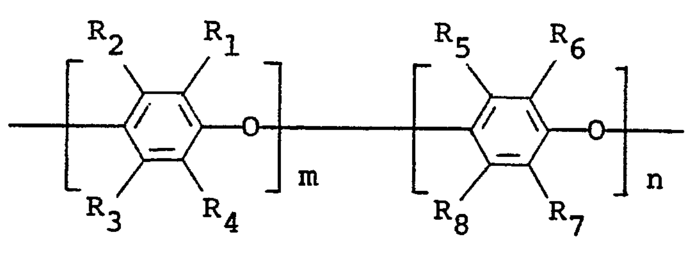 ... (I)

wherein $R_1$, $R_2$, $R_3$, $R_4$, $R_4$, $R_5$, $R_6$, $R_7$ and $R_8$ are identical or different, and each represuts a hydrogen atom or a substituent such as an alkyl group, an aryl group or a halogen atom, and m and n represent the degree of polymerization.

Specific examples include poly(2,6-dimethylphenylene-1,4-ether), poly(2,3,6-trimethylphenylene-1,4-ether), poly(2,6-diethylphenylene-1,4-ether), poly(2,6-dibromophenylene-1,4-ether), poly(2-methyl-6-ethylphenylene-1,4-ether), poly(2-chloro-6-methylphenylene-1,4-ether), poly(2-methyl-isopropylphenylene-1,4-ether), poly(2,6-di-di-n-propylphenylene-1,4-ether), poly(2-chloro-6-bromophenylene-1,4-ether), poly(2-chloro-6-ethylphenylene-1,4-ether), poly(2-merhylphenylenel,4-ether), poly(2-2-chlorophenylene-1,4-ether), poly(2-phenylphenylene-1,4-ether), poly(2-methyl-6-phenylphenylene-1,4-ether), poly(2-bromo-6-phenylphenylene-1,4-ether), poly(2-methyl-6-phenylphenylene-1,4-ether), a random copolymer of 2,6-dimethylphenol and 2,3,5-trimethylphenol, and a random copolymer of 2-methyl-6-ethylphenol and 2,3,6-trimethylphenol. Each of these polymers may have a styrene compound graft copolymerized with it.

They may be easily obtained by oxidatively polymerizing the correspondig substituted phenols by the method described in Japanese Laid-Open Patent Publication No. 1869/1981. For example, a stainless reactor equipped with an oxygen introducing device, a cooling device, a stirring device and a temperature detecting device is sufficiently purged with nitrogen. Then, N-butylamine, toluene, cupric bromide and a substituterd phenol (such as 2,6-xylenol alone or a 9:1 mixture of 2,6-xylenol and 2,3,6-trimethylphenol) are added to the reactor and dissolved. While the mixture is fully cooled so as to maintain a reaction tempeature of 30 °C, the mixture is polymerized for 90 minutes while flowing oxygen abruptly into the reactor. After the polymerization, toluene and an aqueous solution of a sodium salt of ethylene diamine are added to stop the reaction. The reaction solution was repeatedly centrifugated, re-sedimented and washed to purify it. The purified product is dried to give the desired polyphenylene ether resin. The preferred degree of polymerization (m + n) of the polyphenylene ether resin is 50 to 400.

The copolymer resin (B) used in this invention is prepared from an aromatic vinyl monomer and (meth)-acrylate as essential components. It may be, for example, a two-component and/or three-component copolymer resin derived from an aromatric vinyl monomer, acrylilc acid and/or methacrylic acid, or a multi-component copolymer resin composed of an aromatic vinyl monomer, acrylic acid and/or methacrylic acid, and other monomers copolymerizable with an aromatic vinyl monomer and/or (meth)acrylioic aid. Since a copolymer resin prepared by using the aromatic vinyl monomer, (meth)acrylic acid and rubber as essential components is excluded from the copolymer (B) since it is dealt with as the rubber-containing thermoplastic resin (D).

Examples of aromatic vinyl monomer constituting the copolymer resin (B) are aromatic vinyl compounds such as styrene, alpha-methylstyrene, p-methylstyrene, vinylxylene, monochlorostryene, diclorostyrene, monobromostyrene, dibromostyrene, p-t-butylstyrene, ethylstyrene and vinyl naphthalene. Styrene, alpha-methylstyrene and p-t-butylstyrene. Of these styrene and a mixture of styrene and alpha-methylstyrene are particularly prefer red. In view of economy, styrene is especially preferred.

The (meth)acrylic adid may be acrylic acid, methacrylic acid, or a mixture of acrylic acid and methacrylic acid. The use of methacrylic acid alone is preferred because it makes the method of manufacturing the copolymer resin (B) easy and can give a molded article having excellent thermal stability and appearance. The weight ratio of the aromatic vinyl monomer ($b_1$) to acrylic acid ($b_2$), ($b_1$)/($b_2$), is usually from 50/50 to 99/1. In view of the balance among the melt viscosity of the polymer, the appearance, thermal resistance and rigidity of the molded article and productivity, it is preferably from 60/40 to 97/3, especially from 70/30 to 96/4.

Examples of the other monomer copolymerizable with the aromatic vinyl monomer and/or (meth)acrylic acid include alkyl esters of (meth)acrylic acid typified by methyl methacrylate, ethyl acrylate and butyl acrylate; vinyl cyanide compounds typified by acrylonitrile and methacrylonitrile; polymerizable unsaturated fatty acids such as itaconic acid, maleic acid, fumaric acid, crotonic acid and cinnamic acid; malimides typified by N-methylmalilmide, N-ethylmaleimide, N-butylmaleimide, N-octylmaleimide, N-phenylmaleimide, N-p-bromophenylmaleimide, N-o-chlorophenylmaleimide and N-cyalohexylmaleimide; unsaturated carboxylic acid anhydrides typified by maleic anhydride, itaconic anhydride and citraconic anhydride; epoxy-containing unsaturated compounds typified by allyl glycidyl ether and glycidyl methacrylate; amino-contraining unsaturated compounds typified by allylamine, aminoethyl methacrylate, aminopropyl methacrylate and aminostyrene; acrylamide-type compounds typified by acrylamide and N-methylacrylamide; and hydroxyl-containing unsaturated compounds typified by 2-hydroxyethyl acrylate, 3-hydroxy propyl methacrylate and 4-hydroxy-2-butene. These polymerizable compounds are not limited to these specific examples. The use of these other monomers is an effective technique of improving the effects of this invention such as thermal resistance and compatibility. These other monomers may be used singly or in combination. These other monomers are used usually in an amount of not more than 50 parts by weight per 50 parts by weight of the aromatic vinyl monomer and (meth)acrylic acid combined. If the amount of the other monomers exceeds 50 parts by weight, the properties of the copolymerizable monomer become outstanding, and the thermal resistance of the copolymer resin (B) is reduced, or the compatibility with the polyphenylene ether resin (A) may possibly be reduced undesirably.

The copolymer resin (B) may be easily produced by a known or customary method. Specifically, it may be produced in the presence or absence of a known radical catalyst or an ionic catalyst by known polymerization method such as suspension polymerization, solution polymerization, emulsion-suspension

polymerization, emulsion-solution polymerization, or suspension-solution. It may be produced by a batchwise process, a continuous process or a batchwise-continous process.

For example, a styrene monomer, methacrylic acid and optionally other monomers that are copolymerizable with them may be polymerized in suspension or in bulk at 60 to 180 °C by using a radical generator and a chain-transfer agent. Then, as required, an antioxidant, a plasticizer, a fire retardant, an antistatic agent, and a mineral acid may be added, and the mixture may be granulated by an extruder or the like.

The polymmeric chain structure of the polymer produced by this method is not particularly limited. In a copolymer in which no rubber is copolymerized, the aromatic vinyl monomer and (meth)acrylic acid are preferably arranged as randomly as possible rather than in a blocked structure. The weight average molecular weight of the copolymer resin (B) is usually 20,000 to 500,000.

The resulting copolymer resin so obtained, and its modified polymers obtained, for example, by converting some of the carboxyl groups into acid anhydride groups and/or glutaric anhydride groups, by ionically crosslinking the copolymer with an alkali metal or an alkaline earth metal by utilixzing the properties of the casrboxyl groups, or by modifying the copolymers with an compound containing amide groups or hydroxyl groups to form an amide linkage, an ester linkage, etc.

Examples of the alkyl (meth)acrylate resin (C) used in this invention are a homopolymer of an alkyl (meth)acrylate, a copolymer of two or more of alkyl (meth)acrylates, and a copolymer prepared from an alkyl (meth)acrylate and another monomer copolymerizable with it. Specific examples are a homopolymer methyl methacrylate, a copolymer of at least 50 % by weight of methyl methacrylate and not more than 50 % by weight of another monomer. Examples of the other monomers include ethyl acrylate, ethyl acrylate, butyl acrylate, ethyl methacrylate, butyl methacrylate, cyclohexyl methacrylate, acrylic acid, methacrylic acid, styrene, actyronitile. The homopolymer of methyl methacrylate is an especially preferred resin (C).

There is no particular restriction on the method of producing the alkyl (meth)acrylate resin (C). For example, a monomeric mixture containing an alkyl (meth)acrylate such as methyl methacrylate may be polymerized in bulk, solution, emulsion or suspension in the presence of a chain transfer agent and a radical generator.

Depending upon the end use, a method of including rubber component may be any method by which rubber component in any form can be included into the composi tion. The resin composition of this invention may preferably contain rubber component in additionn to the above components. The polyphenylene-ether resin (A), the copolymer resin (B) prepared from the aromatic vinyl monomer and (meth)acrylic acid as essential components and the alkyl (meth))acrylate (C) have relatively good compatibility and the resulting composition have superior thermal resistance and other physical and chemical properties. But the composition is very rigid. Accordingly, in a field where the high impact is required, rubber component may preferably be added to increase impact strength. For example, rubber and/or a rubber-containing thermoplastic resin (D) is further mixed with the polyphenylene ether resin (A), the copolymer resin (B) and the alkyl acrylate resin (C) to form a polymer alloy.

The content of the rubber component is usually 0 to 40 % by weight, preferably 1 to 20 % by weight.

In the present invention, the rubber (D) is a polymeric material having high elasticity and includes not only so-called rubber ($D_1$) defined by JIS or ASTM but also a thermopllastic elastomer ($D_2$) which is a polymeric material that need not to be vulcanized and shows plasticity in a high temperature region and shows rubber elasticity at room temperature.

Exam,ples of the so-called rubber ($D_1$) include natural rubber (NR), styrene/butadiene rubber (SBR), butadiene rubber (BR) butyl rubber, ethylene/propylene rubber (EPDM, EPM), acrylic rubber (ACM, ANM), chlorinated polyethylene rubber (DSR), fluorine rubber (PKM), silicone rubber (Q), uretane rubber (AU, ED), polysulfide rubber, epichlorohydrin rubber, chlorosulfonated polyethylene, norbornene rubber, andor polymeric materials resulting from vulcanization of the above rubbers. Of these, styrene-butadiene rubber (SBR), butadiene rubber, isoprene rubber (IR), chloroprene rubber, ethylene/pro pylene rubber (EPDM, EPM) and acrylic rubber (ACM) are preferred.

The thermosetting elastomer ($D_2$) is a polymeric material which does not require vulcanization, and shows properties intermediate between rubber and a thermoplastic resin, i.e.shows plasticity in a high tepmperature region and rubbery elasticity at room temperature, or have the properties of both. The thermoplastic elastomer ($D_2$) is characterized by having a soft segment and a hard segment which is a crystalline or glassy segment preventing plastic deformation at room temperature, the two segments being incompatible with each other. A typical example of the soft segment is an amorphous polymer having a low glass transition temperature such as polybutadiene, polyether or polyester. Typical examples of the hard segment are a non-crosslinked hard segment typified by polystyrene and polyurethane, and a crosslinked hard segment (ionomer) typified by an alkali metal or an alkaline earth metal. More specific examples are

styrene/butadiene and/or isoprene block or graft copolymer, styrene/methyl methacrylate block or graft copolymer, butadiene and/or isoprene/styrene, methyl methacrylate or acrylonitrile block or graft copolymer and polymeric material having combinations of a hard segment and a soft segment which are shown in the following table.

| Hard segment | Soft segment |
|---|---|
| Polyethylene and/or polypropylene | Polybutadiene and/or polyisoprene |
| Polyester | Polyether |
| Polyurethane | Polyester or polyether |
| Poly(trans-1,4-isopene) | Amorphous polyisoprene |
| Poly(1,2-butadiene) | Amorphous polybutadiene |
| Polyvinyl chloride | Amorphous polyvinyl chloride |
| Polyamide | Polyester or polyether |

Examples of the rubber-containing thermoplastic resin include a blend of a thermoplastic resin with the rubber ($D_1$) and/or thermoplastic elastomer ($D_2$), and a copolymer of a polymerizable monomer and the above rubber ($D_1$) and/or thermoplastic elastomer ($D_2$) copolymerizable with the monomer. Examples of the polymerizable monomer are aromatic vinyl monomers such as alpha-methylstyrene and t-butylstyrene, unsaturated fatty acids such as acrylic acid, methacrylic acid and maleic anhydride; alkyl esters (e.g., methyl, ethyl or butyl esters) of unsaturated fatty acids; and acrylonitrile, methacrylanitrile, and phenyl or cyclohexyl maleimide. These monomers may be used singly or as mixtures.

Among them preferred are copolymers obtained by copolymerizing at least one monomer selected from styrene, (meth)acrylic acid, methyl (meth)acrylate, maleic anhydride and acrylonitrile with a diene-type rubber such as polybutadiene and polyisoprene.

Furthermore, graft- or block-copolymerized copolymer resins are preferred. For example, a copolymer resin (MBS resin) obtained by graft-copolymerizing styrene and methyl methacrylate with polybutadiene rubber- modified polystyrene ("high-impact polystyrene") obtained by polymerizing styrene in the presence of polybutadiene, a copolymer resin (ABS resin) obtained by copolymerizing polybutadiene with styrene and acrylonitrile, and a copolymer resin obtained by copolymerizing styrene and/or acrylonitrile with EPDM may be cited.

In the present invention, the polyphenylene ether resin (A) and the copolymer resin (B) may be used in weight ratio of from 90:10 to 10:90, preferably from 80:20 to 20:80. The alkyl (meth)acrylate resin (C) is used in an amount of usually 1 to 40 parts by weight, preferably 4 to 25 parts by weight, per 100 parts by weight of the components (A), (B) and (C) or components (A), (B), (C) and (D) combined.

In the present invention, another resin (E) may be added to the three components (A), (B) and (C) or optionally (D). Examples of the resin (E) include thermoplastic resins such as polyethylene, polypropylene, polyvinyl chloride, polystyrene, AS resin, polyvinyl alcohol, polyvinylidene chloride, polyvinyl butyral, polymethylpentene-1, polybutene, polyiisoprene, fluorine resins, polyamides, polyacetals, polyesters, polycarbonates, polyphenylene sulfides, polysulfones, polyether ether ketones, styrne/maleic anhydride copolymer, polyethylenes modified with (meth)acrylic acids, and polypropylene; and thermosetting resins such as epoxy resins, phenoxy resins, phenolic resins, urea resin, melamine resins, diallyl phthalate resin, silicone resins, unsaturated polyester resins, and alkyd resins. These resins may be used singly or in combination. Preferred among them are polystyrene, AS resin, fluorine resins, polyamide, polyacetals, polyesters, polycarbonates, styrene/maleic anhydride copolymer and epoxy resin. Styrene-type resins such as polystyrene, and styrene/maleic anhydride copolymer are especially preferred.

The resin (E) may be mixed at a time with the components (A), (B), (C) and (D). Alternatively, the resin (E) may be first mixed with one or mroe of these components, and the mixture is then mixed wit the remaining components. For example, it is possible to mix a mixture of (B), (C) and (E) with (A) or both (A) and (D).

The amount of the resin (E) used may be usually 0 to 40 % by weight, preferably 3 to 25 % by weight, based on 100 parts by weight of the components (A), (B), (C), (D) and (E) combined.

The thermoplastic resin composition of this invention may be producced by known methods. For example, a dry blending method or melt kneading methods using a hot roll, a Banbury mixer, a single-screw extruder, a twin-screw extruder, or a single screw-twin screw combined extruder.

The thermoplastic resin of this invention may have conventional coompouning agents such as antioxidants, ultraviolet absorbers, lubricants, fire retardants, antistatic agents and blowing agents incorporated therein.

Preferred compounding agents are hydroxyl-containing compounds such as saturated fatty acids and/or esters thereof such as stearic acid and/or stearyl glycerides and/or its esters, hydroxyl containing compounds such as stearyl alcohol, organic polysiloxanes such as dimethylpolysiloxane, mineral oils, polyester plasticizers, hindered amine-type antioxidants, and phosphorus-type antioxidant such as triphenyl phosphate, tri(nonylphenyl) phosphate and oligomers or polymers thereof, and tetrabromobisphenol A and epichlorohydrin condensed polymers.

In addition to these compounding agents, fillers such as glass fibers, carbon fibers, metallic fibers, glass beads, glass powder, glass flakes, asbestos, wollastunite, mica, talc, clay, calcium carbonate, titanium, calcium titanate and beryllium sulfate. These filler may be used singly or in combination. The amount of these fillers may be 1 to 100 parts by weight of the per 100 parts by weight of thermoplastic resin. the thermoplastic resin composition of this invention may be molded into various articles such as films or sheets by various methods such as injection molding, casting ing, extrusion, stretching, vacuum forming, pressure forming, molding of irregularly-shaped articles and extrusion foaming.

The thermoplastic resin of this innovation have an extensive range of utility, for example, parts and cases of electric or electronic devices such as connectors, switches, timers, terminal stands, adapters, relays, transducers, and motors; parts, outside panels, and casings of household electrical appliances such as moisturizers, rice cooker, fans and telephones; parts and housings of business machines such as copying machines, printers, facsimiles, cathode-ray tubes, computers, word processors and registers; automobives parts and panels such as instrument panels, upper garmish, radiator grills, speaker grills, louvers, wheel covers, hub caps, oil pipes, reservoir tanks, head lamp reflectors, air-conditioner valves and crank case covers; parts and cases of precision devices such as a camera, slide projectors, watches and measuring instrumenta; parts and cases of general machines such as pumps, fans, electrically operated tools, hoses and tubes; parts and housings of sea water distilling devices; material in civil engineering and building fields such as foamed heat insulative sheets and boards; consumer products such as films, foamed sheets, boards, panels, audio cassettes, videocassette cases, and halves, helmets, foamed containers, tableware, feeding bottlles, toys, and chocolate formers; therapeutic materials such as pats and cases of therapeutic devices, and containers for pharmaceuticals; sheets and boards for windowpanes, green houses, safety covers for machines, and nameplates; films for packaging and lamination; and foamed sheets and boards such as food containers, cushioning materials, automobile ceilings and heat insulators.

The following Referential Examples, Examples and Comparative Examples will illustrate the present invention more specifically.

All parts and percentages in the following examples are by weight unless otherwise specified.

The various properties were measured by the following methods.

Heat distortion temperature: ASTM D-648

Izod impact stregth: ASTM, D-256 (thickness 1/4 inch, notched)

Melt flow index: ASTM D-1238

Tensile strength: ASTM D-638 (thickness 1/8 inch)

Flexural strength: ASTM D-790 (thickness 1/4 inch)

## REFERENTIAL EXAMPLE 1

A 5-liter stainless steel reactor equipped with a turbine-type stirring vane was charged with 2,000 ml of distilled water. As a suspension stabilizer, 10 g of partially saponidifed polyvinyl alcohol and 0.05 g of sodium dodecylbenzenesulfonate were dissolved. Then, 940 g of styrene, 50 g of methacrylic acid, 10 g of liquid paraffin, 4 g of di-tert.butyl peroxyhexahydroterephthalate and 1 g of tert-.butyl perbenzoate were fed into the reactor successively. The inside of the reactor was purged with nitrogen gas. At a stirring speed of 500 rpm, the mixture was heated, and suspension polymerzied at 90 °C for 10 hours. The reaction was further carried out at 120 °C for 3 hours. The resulting granular styrene/methacrylic acid copolymer resin was washed, dehydrated and dried.

Then, stearyl alcohol was added to the copolymer resin in an anount of 0.5 % based on the copolymer resin. In a nitrogen stream, the copolymer was pelletized by an extruder at a cylinder temperature of 250 °C. The resulting product will be referred to as (B-1) hereinafter.

REFERENTIAL EXAMPLES 2-7

Example 1 was repeated except that the monomers having the composition shown in Table 1 were used. Copolymer resins (B-2) to (B-7) were obtaiend

REFERENTIAL EXAMPLE 8

A nitrogen-purged 5 liter reactor equipped with a stirring device was charged with 1900 g of deionized water, and then, as an emulsifier, 50 g of a 20 % aqueous solution of sodium rosinate was added, and then 2000 g of a polybutadiene (PBD) latex having a solids content of 50.0 % was fed.

Then, 240 g (corresponding to 30 %) of the mixture of 640 g of styrene and 160 g of methacrylic acid, was added togeter with 0.5 g of tert-dodecyl mercaptan and 4 g of tris(nonylphenyl) phosphite. While nitrogen gas was blown into the reactor, temperature elevation was started. When the temperature reached 65 °C, 100 g of deionized water containing 2 g of potassium persulfate was fed, and subsequently temperature elevation was carried out. When the temperature reached 70 °C, The remainder (560 g) of the monomeric mixture was added over 2.5 hours at an equal speed.
After the addition, the mixture was maintained at the same temperature for 1.5 hours. Then, the the mixture was heated to 80 °C and maintained at this temperature for 1 hour to terminate emulsion polymerization.

After the polymerization, the product was coagulated with magnesium sulfate, washed, dehydrated and dried. To obtain a graft copolymer (D-1) in the form of a powder.

REFERENTIAL EXAMPLES 9-10

The monomers and rubber were used in the composition shown in Table 1 Otherwise, Referential Example 8 was repeated. Graft copolymer resins (D-2) and (D-3) were obtained.

EXAMPLES 1-12 AND COMPARATIVE EXAMPLES 1-12

In each run, the components having the compositions shown in Table 2 were mixed in a tumbler, and then melted, kneaded and extrudered at a temperature of 240 to 270 °C by an extruder having a cylinder diameter of 30 mm, and then pelletized. Using these samples various properties were measured. The results of Examples 1 to 12 are shown in Table 2, and the results of Comparative Examples 1 to 12 are shown in Table 3.

Table 1

| Item | | Example | | | | | | | | | |
|---|---|---|---|---|---|---|---|---|---|---|---|
| | | 1 | 2 | 3 | 4 | 5 | 6 | 7 | 8 | 9 | 10 |
| Designation of the resin | | (B-1) | (B-2) | (B-3) | (B-4) | (B-5) | (B-6) | (B-7) | (D-1) | (D-2) | (D-3) |
| Aromatic vinyl monomer (parts) | Styrene | 94 | 85 | 80 | 80 | 65 | 70 | 75 | 40 | 30 | 15 |
| | α-methylstyrene | - | 5 | 5 | - | - | - | - | - | - | - |
| | α-methylstyrene dimer | - | - | - | - | 5 | - | - | - | - | - |
| (meth)acrylic acid (parts) | Methacrylic acid | 6 | 10 | 15 | 20 | 30 | 20 | 20 | 10 | 10 | - |
| | Acrylic acid | - | - | - | - | - | - | 5 | - | - | - |
| Other monomer copolymerizable (parts) | Methyl methacrylate | - | - | - | - | - | - | - | - | 10 | 35 |
| | Butyl acrylate | - | - | - | - | - | 10 | - | - | - | - |
| Polybutadiene (parts) | | - | - | - | - | - | - | - | 50 | 50 | 50 |
| Weight average molecular weight ( $\overline{M}w$) (x $10^{-3}$) | | 300 | 250 | 240 | 190 | 110 | 200 | 210 | - | - | - |

Table 2

| Item | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Composition | Polyphenylene ether (A) *1 | 80 | 80 | 70 | 50 | 50 | 30 | 63 | 45 | 25 | 24 | 20 | 60 |
| | Copolymer resin (B) | (B-1) 12 | (B-3) 12 | (B-3) 18 | (B-7) 35 | (B-6) 30 | (B-5) 49 | (B-3) 16 | (B-4) 32 | (B-5) 49 | (B-5) 39 | (B-2) 55 | (B-3) 15 |
| | Polymethyl methacrylate (C) | PMMA *1) 8 | PMMA 8 | PMMA 12 | MS *3) 15 | PMMA 20 | PMMA 21 | PMMA 11 | MS 13 | PMMA 21 | PMMA 17 | PMMA 5 | PMMA 10 |
| | Rubber and/or rubber-containing thermoplastic (D) | - | - | - | - | - | - | MBS *4) 10 | (D-1) 10 | SBS *5) 5 | (D-2) 15 | (D-3) 15 | MDS 10 |
| | Other resin (E) | - | - | - | - | - | - | - | - | - | - | - | PS*7) 5 |
| Properties | Heat distortion temperature (° C) | 162 | 166 | 158 | 152 | 148 | 141 | 156 | 150 | 136 | 139 | 110 | 152 |
| | Melt flow index (g/10 min.) | 1.0 | 1.0 | 1.1 | 1.1 | 1.2 | 1.0 | 1.0 | 1.1 | 6.0 | 2.0 | 2.0 | 3.0 |
| | Izod impact strength (kg-cm/cm) | 6.5 | 6.4 | 6.1 | 5.2 | 4.5 | 3.6 | 21 | 16 | 10 | 11 | 10 | 19 |
| | Tensile strength ($kg/cm^2$) | 625 | 627 | 650 | 639 | 695 | 716 | 585 | 542 | 655 | 600 | 451 | 581 |
| | Flexural strength ($kg/cm^2$) | 1010 | 1015 | 1030 | 985 | 1072 | 1020 | 927 | 841 | 950 | 918 | 746 | 919 |

*1) Polyphenylene ether (A): Poly(2,6-dimethyl-1,4-phenylene oxide, $\overline{M}w$ = 46,000, Tg = 211 °C
*2) PMMA: Polymethyl methacrylate, $\overline{M}w$ = 43,000
*3) MS: Styrene-methyl methacrylate copolymer (methyl methacrylate, content 60 %), $\overline{M}w$ = 14,000
*4) MBS: Polybutadiene grafted styrene-methyl methacrylate copolymer (polybutadiene content 70 %)
*5) SBS: Styrene-butadiene block copolymer
*6) HIPS: High impact polystyrene (butadiene content 10 %)
*7) PS: Polystyrene

Table 3

| Item | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Composition | Polyphenylene ether (A) *1 | 80 | 70 | 50 | 30 | 63 | 70 | 50 | 100 | - | - | - | 35 |
| | Copolymer resin (B) | (B-1) 20 | (B-3) 30 | (B-4) 50 | (B-5) 70 | (B-3) 27 | - | - | - | - | - | - | (B-3) 15 |
| | Poly(methyl methacrylate) (C) | - | - | - | - | - | - | - | - | PMMA *2) 100 | - | - | - |
| | Rubber and/or rubber-containing thermoplastic | - | - | - | - | MBS *4) 10 | - | HIPS *6) 50 | - | - | HIPS 100 | - | HIPS 50 |
| | Resin (D) | - | - | - | - | - | - | - | - | - | - | - | - |
| | Other resin (E) | - | - | - | - | - | PS*7) 30 | - | - | - | - | PS 100 | - |
| Properties | Heat distortion temperature (° C) | 165 | 160 | 153 | 150 | 158 | 140 | 125 | 182 | 90 | 85 | 86 | 113 |
| | Melt flow index (g/10 min.) | 1.1 | 1.1 | 1.1 | 0.9 | 0.9 | 5 | 3.1 | <0.5 | 2.2 | 6.9 | 25 | 3.8 |
| | Izod impact strength (kg-cm/cm) | 6.0 | 5.5 | 3.5 | 3.5 | 9.8 | 5 | 7.5 | 7.0 | 1.6 | 11 | 1.5 | 6.7 |
| | Tensile strength ($kg/cm^2$) | 625 | 592 | 589 | 595 | 530 | 543 | 420 | 590 | 790 | 310 | 460 | 399 |
| | Flexural strength ($kg/cm^2$) | 941 | 930 | 910 | 875 | 831 | 920 | 695 | 984 | 1100 | 450 | 780 | 585 |

*1) Polyphenylene ether (A): Poly(2,6-dimethyl-1,4-phenylene oxide, $\overline{M}w = 46,000$, Tg = 211 ° C
*2) PMMA: Polymethyl methacrylate, $\overline{M}w = 43,000$
*3) MS: Styrene-methyl methacrylate copolymer (methyl methacrylate, content 60 %), $\overline{M}w = 14,000$
*4) MBS: Polybutadiene grafted styrene-methyl methacrylate copolymer (polybutadiene content 70 %)
*5) SBS: Styrene-butadiene block copolymer
*6) HIPS: High impact polystyrene (butadiene content 10 %)
*7) PS: Polystyrene

## Claims

1. A thermoplastic resin composition comprising (A) a polyphenylene ether resin, (B) A copolymer resin prepared from an aromatic vinyl monomer and (metha)acrylic acid as essential components and (C) an alkyl (meth)acrylate resin.

2. The composition of claim 1 in which the alkyl (meth)acrylate resin (C) is methyl methacrylate resin comprising methyl methacrylate as a main component.

3. The composition of claim 1 in which the alkyl (meth)acrylate resin (C) is polymethyl methacrylate.

4. The composition of claim 1, 2 or 3 in which the weight ratio of the polyphenylene ether resin (A) to the copolymer resin (B) is from 90:10 to 10:90.

5. The composition of claim 1, 2 or 3 in which the copolymer resin (B) is a copolymer prepared from styrene ($b_1$) and methacrylic acid ($b_2$) as essential components, and the weight ratio of ($b_1$)/($b_2$) is from 60:40 to 97:3.

6. The composition of claim 1, 2, 3, 4, or 5 in which the amount of the alkyl (meth)acrylate resin (C) is 4 to 25 parts by weight per 100 parts by weight of components (A), (B) and (C) combined.

7. The thermoplastic resin composition comprizing (A) a polyphenylene ether resin, (B) A copolymer resin prepared from an aromatic vinyl monomer and (metha)acrylic acid as essential components, (C) an alkyl (meth)acrylate resin. and (D) rubber and/or a rubber-containing thermoplastic resin.

8. The composition of claim 7 in which the alkyl (meth)acrylate resin (C) is a methyl methacrylate resin comprising methyl methacrylate as a main component.

9. The compositoin of claim 7 in which the alkyl (meth)acrylate resin (C) is polymethyl methacrylate.

10. The composition of claim 7, 8 or 9 in which the the weight ratio of the polyphenylene ether resin (A) to the copolymer resin (B) is from 90:10 to 10:90.

11. The composition of claim 7, 8 or 9 in which the copolymer resin S(B) is a copolymer prepared from (styrene ($b_1$) and methacrylic acid ($b_2$) as essential components, and the weigh ratio of ($b_1$)/($b_2$), is from 60:40 to 97:3.

12. The composition of claim 7, 8, 9, 10 or 11 in which, the amount of the alkyl (meth)acrylate resin (C) is 4 to 25 parts by weight per 100 parts of the components (A), (B), (C) and (D) combined, and the content of a rubber component in the rubber and/or the rubber-containing thermoplastic resin is 1 to 20 parts by weight per 100 parts by weight of the components (A), (B), (C) and (D) combined.